# EUROPEAN PATENT APPLICATION

(11) **EP 4 769 692 A1**
(43) Date of publication of application: **01.07.2026**
(21) Application number: 24931129.1
(22) Date of filing: 20.12.2024
(51) Int. Cl.: H01M 50/143, H01M 50/178, H01M 50/502, H01M 50/105

(54) **BATTERY CELL, BATTERY ASSEMBLY, AND MOVING MEANS**

(30) Priority: 19.03.2024 KR 20240037551
(71) Applicant: LG ENERGY SOLUTION, LTD., Seoul 07335 (KR)
(72) Inventor: UHM, Jae Yong, Daejeon 34122 (KR)
(74) Representative: BCKIP Part mbB
(86) International application number: PCT/KR2024/020788
(87) International publication number: WO 2025/198133

(57) **Abstract**

The present disclosure relates to a battery cell capable of effectively delaying the propagation of heat to an adjacent battery cell even in the event of thermal runaway, a battery assembly capable of improving thermal stability, and a vehicle capable of reducing a risk of being entirely burnt down by fire may comprise an electrode assembly, a cell case including a main body portion configured to accommodate the electrode assembly, and a terrace portion disposed outside the main body portion, an electrode lead extended to the outside from the cell case through the terrace portion, and a foamable refractory member disposed adjacent to the terrace portion.

## Description

### [Technical Field]

This application claims priority to and the benefit of Korean Patent Application No. 10-2024-0037551 filed with the Korean Intellectual Property Office on March 19, 2024, the entire contents of which are incorporated herein by reference.

The present disclosure relates to a battery cell.

In addition, the present disclosure relates to a battery assembly.

In addition, the present disclosure relates to a vehicle.

### [Background Art]

A vehicle means such as an electric car may include a battery assembly or the like as a power supply source.

The battery assembly may include a battery module, a battery pack, and the like. The battery module or the battery pack may include a plurality of battery cells. Thermal runaway (TR) may refer to a situation in which an internal temperature of the battery successively increases, which leads to explosion. The thermal runaway may occur when the battery has mechanical, electrical, and/or thermal abnormality.

When the thermal runaway occurs in one battery cell in the battery assembly, flames and emissions caused by the thermal runaway may release from the battery cell and transfer heat to another adjacent battery cell. In particular, the flame released from one battery cell may easily propagate to another adjacent battery cell through an electrode lead. In this case, the electrode lead may be a member configured to electrically connect the battery cell to the outside.

A refractory coating material is a material that may form a refractory thermal insulation layer by expanding when being exposed to the flame. When an adherend is exposed to the flame, the refractory coating material may change to char and protect the adherend from flame and heat.

### [Disclosure]

### [Technical Problem]

The present disclosure has been made in an effort to provide a battery cell capable of effectively delaying the propagation of heat to an adjacent battery cell even in the event of thermal runaway.

The present disclosure has been made in an effort to provide a battery assembly capable of improving thermal stability.

The present disclosure has been made in an effort to provide a vehicle capable of reducing a risk of being entirely burnt down by fire.

### [Technical Solution]

An embodiment of the present disclosure provides a battery cell comprising: an electrode assembly; a cell case comprising a main body portion configured to accommodate the electrode assembly, and a terrace portion disposed outside the main body portion; an electrode lead extended to the outside from the cell case through the terrace portion; and a foamable refractory member disposed adjacent to the terrace portion.

The main body portion may form an accommodation space configured to accommodate the electrode assembly, a thickness of the terrace portion may be smaller than a thickness of the main body portion, and a width of the terrace portion adjacent to the electrode lead may be smaller than a width of the terrace portion adjacent to the main body portion.

The foamable refractory member may be disposed on a surface of the terrace portion, and a width of the foamable refractory member adjacent to the electrode lead may be smaller than a width of the foamable refractory member adjacent to the main body portion.

The foamable refractory member may expand at a temperature equal to or higher than a predetermined temperature.

A shape of the foamable refractory member may correspond to a shape of the terrace portion.

The foamable refractory member may be a coating material covering at least a part of a surface of the terrace portion.

The battery cell may further comprise a porous member disposed between the terrace portion and the foamable refractory member.

A width of the porous member adjacent to the electrode lead may be smaller than a width of the porous member adjacent to the main body portion.

A shape of the porous member may correspond to a shape of the terrace portion.

The porous member may cover a surface of the terrace portion.

A thickness of the porous member may be smaller than a thickness of the main body portion.

The porous member may have a plurality of perforated holes.

A cross-section of each of the plurality of perforated holes may have a polygonal shape having a predetermined area, and the plurality of perforated holes may be spaced apart from one another at predetermined intervals
At least some of the plurality of perforated holes may be filled with the foamable refractory member.

The foamable refractory member may pass through at least some of the plurality of perforated holes.

A thickness of the foamable refractory member may be smaller than a thickness of the porous member.

The battery cell may further comprise: an adhesive member disposed between the terrace portion and the porous member.

The adhesive member may be configured to attach the terrace portion and the foamed refractory member.

Another embodiment of the present disclosure provides a battery assembly comprising: an assembly case comprising an accommodation space; a cell assembly disposed in the accommodation space; and a busbar assembly disposed between the assembly case and the cell assembly, wherein the cell assembly comprises a plurality of battery cells and wherein at least one battery cell of the cell assembly comprises: an electrode assembly; a cell case comprising a main body portion configured to accommodate the electrode assembly, and a terrace portion disposed outside the main body portion; an electrode lead extended to the outside from the cell case through the terrace portion; and a foamable refractory member disposed adjacent to the terrace portion.

The foamable refractory member may be disposed only on the battery cell comprising the corresponding foamable refractory member.

The foamable refractory member may expand when a temperature of the main body portion of the battery cell comprising the corresponding foamable refractory member is equal to or higher than a predetermined temperature.

Yet another embodiment of the present disclosure provides a vehicle comprising: a body part; and a power supply part, wherein the power supply part comprises a battery assembly, wherein the battery assembly comprises: an assembly case comprising an accommodation space; a cell assembly disposed in the accommodation space; and a busbar assembly disposed between the assembly case and the cell assembly, wherein the cell assembly comprises a plurality of battery cells and wherein at least one battery cell of the cell assembly comprises: an electrode assembly; a cell case comprising a main body portion configured to accommodate the electrode assembly, and a terrace portion disposed outside the main body portion; an electrode lead extended to the outside from the cell case through the terrace portion; and a foamable refractory member disposed adjacent to the terrace portion.

### [Advantageous Effects]

The battery cell of the present disclosure may effectively delay the propagation of heat to the adjacent battery cell even in the event of thermal runaway.

The battery assembly of the present disclosure may improve thermal stability.

The transportation means of the present disclosure may reduce a risk of being destroyed by fire.

### [Description of Drawings]

FIG. 1 is a front view of a battery cell of an embodiment.
FIG. 2 is a bottom cross-sectional view of the battery cell of the embodiment.
FIG. 3 is an exploded perspective view of a part of the battery cell of the embodiment.
FIG. 4 is a bottom enlarged view of the battery cell of the embodiment.
FIG. 5 is a front view of a porous member of the embodiment.
FIG. 6 is an exploded perspective view of a battery assembly of the embodiment.
FIG. 7 is a top cross-sectional view of the battery assembly of the embodiment.
FIG. 8 is a top cross-sectional view of the battery assembly of the embodiment.

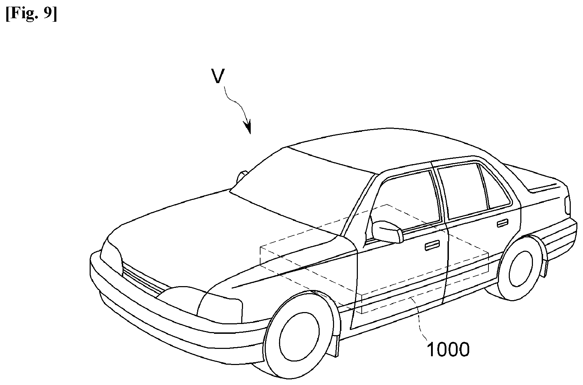

FIG. 9 is a perspective view of a transportation means of the embodiment.

### [Description of Main Reference Numerals of Drawings]

1: Vehicle
10: Battery assembly
100: Cell assembly
110: Battery cell
111: Electrode assembly
1115, 1117: Electrode tab
1119: Insulation film
113: Cell case
1131: Main body portion
1133: Terrace portion
115, 117: Electrode lead
118: Porous member
119: Foamable refractory member
200: Assembly case
210: case main body
220: case endplate
300: Busbar assembly
310: Busbar frame
320: Lead insertion portion

### [Best Mode]

Hereinafter, the present disclosure will be described in detail with reference to the accompanying drawings. However, this description is just illustrative. The scope of the present disclosure is not limited to the exemplarily described specific embodiment.

One embodiment of the present disclosure is a battery cell 110. The battery cell 110 may include an electrode assembly 111, a cell case 113, electrode leads 115 and 117, and foamable refractory members 119.

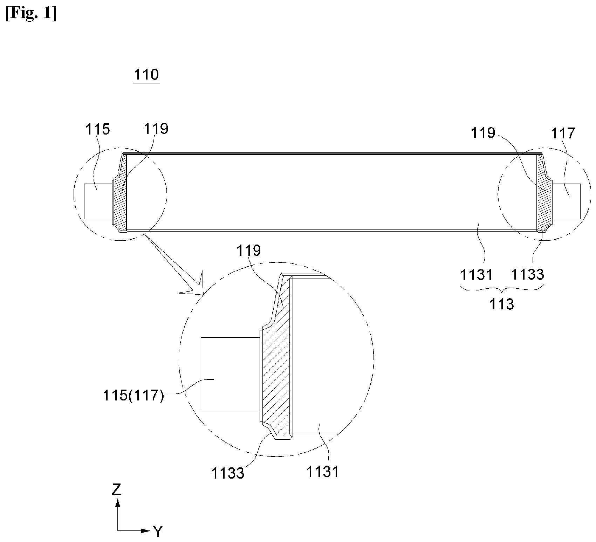

FIG. 1 is a front view of the battery cell 110 of the embodiment.

With reference to FIG. 1, the battery cell 110 may include the cell case 113 configured to accommodate the electrode assembly 111, the electrode leads 115 and 117 extended to the outside from the cell case 113, and the foamable refractory members 119 disposed on the cell case 113.

With reference to FIG. 1, the battery cell 110 may include the electrode assembly 111, and the cell case 113 configured to accommodate the electrode assembly 111. The battery cell 110 may refer to a basic unit of a secondary battery capable of being charged with and discharging electrical energy.

With reference to FIG. 1, the cell case 113 may include a main body portion 1131 and terrace portions 1133. The main body portion 1131 may accommodate the electrode assembly 111. The remaining portion of the cell case 113, which excludes the main body portion 1131, may be the terrace portion 1133. That is, a portion disposed outside the main body portion 1131 may be the terrace portion 1133.

With reference to FIG. 1, the electrode leads 115 and 117 may be extended to the outside from the cell case 113. The electrode leads 115 and 117 may be extended to the outside through the terrace portions 1133 of the cell case 113. The terrace portion 1133 may be disposed between the main body portion 1131 and the electrode leads 115 and 117. Because the electrode leads 115 and 117 are extended to the outside from the cell case 113, flames and heat caused by thermal runaway in the battery cell 110 may easily propagate to an adjacent position through the electrode leads 115 and 117.

With reference to FIG. 1, the foamable refractory member 119 may be disposed adjacent to the terrace portion 1133. The foamable refractory member 119 may be disposed on the portions between the electrode leads 115 and 117 and the main body portion 1131, except for the main body portion 1131 of the cell case 113. Therefore,the propagation of heat through the flame and emission caused by thermal runaway in the battery cell 110 can effectively be delayed.

The electrode assembly 111 may at least include a unit cell including a positive electrode, a negative electrode, and a separator disposed between the positive electrode and the negative electrode. The electrode assembly 111 may include a plurality of unit cells. The electrode assembly 111 may convert electrical energy into chemical energy or convert chemical energy into electrical energy by using an oxidation-reduction reaction.

A shape of the cell case 113 may determine the type of battery cell 110. The types of battery cells 110 may be classified into rectangular, cylindrical, pouch-type, and coin-type battery cells depending on the shape of the cell case 113.

The electrode leads 115 and 117 may be electrically connected to the electrode assembly 111. The electrode leads 115 and 117 may electrically connect the battery cell 110 to the outside. The electrode leads 115 and 117 may connect the electrode assembly 111 to the outside. When the electrode leads 115 and 117 are negative electrode leads, the electrode leads 115 and 117 may contain nickel. When the electrode leads 115 and 117 are positive electrode leads, the electrode leads 115 and 117 may contain aluminum.

The foamable refractory member 119 may contain a refractory coating material. The foamable refractory member 119 may be formed by applying a refractory coating material.

The battery cell 110 may further include an electrolyte. The electrolyte may be injected into and disposed in the cell case 113 of the battery cell 110 and accommodated together with the electrode assembly 111.

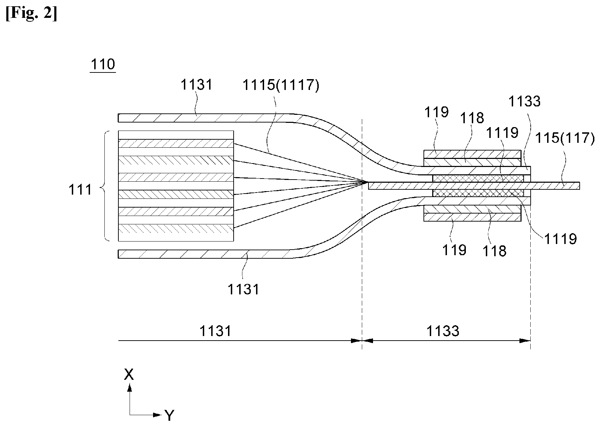

FIG. 2 is a bottom cross-sectional view of the battery cell 110 of the embodiment. The cross-sectional view in FIG. 2 may be obtained by cutting a center of the battery cell 110 in FIG. 1 in a Y-axis direction.

With reference to FIGS. 1 and 2, for example, the cell case 113 may have a pouch (pocket) shape. The battery cell 110 may be a pouch-type battery cell 110.

The pouch-type battery cell 110 may be manufactured by accommodating the electrode assembly 111 in the cell case 113 and sealing the cell case 113. With reference to FIG. 2, the main body portion 1131 may define an accommodation space configured to accommodate the electrode assembly 111. A volume of the main body portion 1131 may correspond to a volume of the electrode assembly 111.

With reference to FIG. 2, the electrodes of the electrode assembly 111 may be connected to the electrode leads 115 and 117 through electrode tabs 1115 and 1117. The electrode tabs 1115 and 1117 may be configured by extending the electrodes of the electrode assembly 111. The electrode tabs 1115 and 1117 may be configured by extending current collectors of the electrodes of the electrode assembly 111. The electrode tabs 1115 and 1117 and the electrode leads 115 and 117 may be coupled by welding or the like.

With reference to FIG. 2, the terrace portion 1133 may be formed by sealing a portion of the cell case 113 that excludes the main body portion 1131. Insulation films 1119 may be disposed between the electrode leads 115 and 117 and inner portions of the cell case 113 corresponding to the terrace portions 1133. The insulation films 1119 may tightly attach the cell case 113 and the electrode leads 115 and 117.

With reference to FIG. 2, a thickness of the terrace portion 1133 may be smaller than a thickness of the main body portion 1131. This is because the main body portion 1131 may accommodate the electrode assembly 111, and the terrace portions may be sealed in a state in which the electrode leads 115 and 117 and the insulation film 1119 (if necessary). In a battery assembly 10 formed by assembling the plurality of battery cells 110, the terrace portion 1133 of the battery cell 110 may define an empty space. Therefore, when the foamable refractory member 119 is disposed adjacent to the terrace portion 1133, the spatial utilization in the battery assembly 10 may be improved.

A width of each of the electrode leads 115 and 117 may be smaller than a width of the electrode assembly 111. A shape of the terrace portion may be modified while corresponding to the shapes of the electrode leads 115 and 117 extended to the outside while sealing the electrode leads 115 and 117. Therefore, a width (i.e., a length in a Z-axis direction in FIG. 1) of the terrace portion adjacent to the electrode leads 115 and 117 (the electrode lead extended to the outside) may be smaller than a width of the terrace portion 1133 adjacent to the main body portion 1131. For example, the terrace portion 1133 may have a shape in which a width thereof decreases in a direction from the main body portion 1131 toward the electrode leads 115 and 117. The battery cell 110 having the above-mentioned shape of the terrace portion 1133 may be more easily coupled to a busbar.

With reference to FIG. 2, the foamable refractory member 119 may be disposed on a surface of the terrace portion 1133. The foamable refractory member 119 may be disposed on one surface or two opposite surfaces of the cell case 113 at a position corresponding to the terrace portion 1133. In addition, the foamable refractory members 119 may be disposed on front and rear surfaces of the terrace portion 1133 with a porous member 118, which will be described below, interposed therebetween.

The foamable refractory member 119 may be formed by applying a refractory coating material onto the terrace portion 1133. The foamable refractory member 119 may be disposed on the surface of the terrace portion 1133. A width of the foamable refractory member 119 adjacent to the electrode leads 115 and 117 may be smaller than a width of the foamable refractory member 119 adjacent to the main body portion 1131.

The type of refractory coating material is not specifically limited as long as the refractory coating material may be formed and/or expands when being exposed to a flame and form char capable of blocking the introduction of outside flame and oxygen and the diffusion of heat. The foamable refractory member 119 may expand at a temperature equal to or higher than a predetermined temperature. Specifically, the foamable refractory member 119 may expand when a temperature of the battery cell 110 is equal to or higher than the predetermined temperature.

A shape of the foamable refractory member 119 may correspond to a shape of the terrace portion 1133.

The configuration in which the shapes correspond to each other may mean a configuration in which similar or identical shapes may overlap each other.

The foamable refractory member 119 may be formed by applying a foamable refractory coating material. That is, the foamable refractory member 119 may be a coating material that covers at least a part of the surface of the terrace portion 1133.

The battery cell 110 may further include the porous member 118. The porous member 118 may be disposed between the terrace portion 1133 and the foamable refractory member 119. The porous member 118 may be disposed between the surface of the terrace portion 1133 and the foamable refractory member 119. Because the foamable refractory member 119 may be formed by applying a foamable refractory coating material, the foamable refractory coating material may be more smoothly applied onto the cell case 113 through pores of the porous member 118. As a result, the porous member 118 may be manufactured to more appropriately attach the foamable refractory member 119 to the terrace portion 1133.

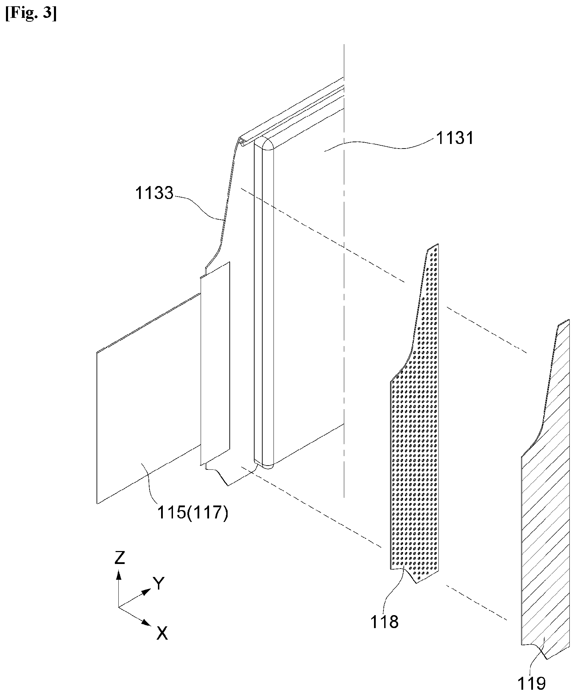

FIG. 3 is an exploded perspective view of a part of the battery cell 110 of the embodiment.

With reference to FIG. 3, the foamable refractory member 119 and the porous member 118 may be disposed on the terrace portion 1133. The porous member 118 may be disposed between the foamable refractory member 119 and the terrace portion 1133.

The porous member 118 may contain a material with sufficient stiffness. As a result, the porous member 118 may support the foamable refractory member 119, and the foamable refractory member 119 may maintain a shape corresponding to the porous member 118.

With reference to FIG. 3, a width of the porous member 118 adjacent to the electrode leads 115 and 117 may be smaller than a width of the porous member 118 adjacent to the main body portion 1131. Therefore, it is possible to reduce a spatial constraint caused by additional members added to the battery cell 110.

With reference to FIG. 3, a shape of the porous member 118 may correspond to a shape of the terrace portion 1133. The porous member 118 may cover the surface of the terrace portion 1133. The porous member 118 may cover at least a part of the surface of the terrace portion 1133. Meanwhile, because the foamable refractory member 119 may be formed by applying a refractory coating material, the foamable refractory member 119 may have a shape penetrating into the pores of the porous member 118.

A thickness of the porous member 118 may be smaller than a thickness of the main body portion 1131. This may mean a configuration in which the porous member 118 may be disposed in the empty space formed in the terrace portion 1133 without changing a volume of the empty space.

With reference to FIG. 3, the porous member 118 may have a plurality of perforated holes. That is, the porous member 118 may have a plurality of holes formed through the porous member 118 in a direction (an X-axis direction in FIG. 3) from the foamable refractory member 119 toward the terrace portion 1133.

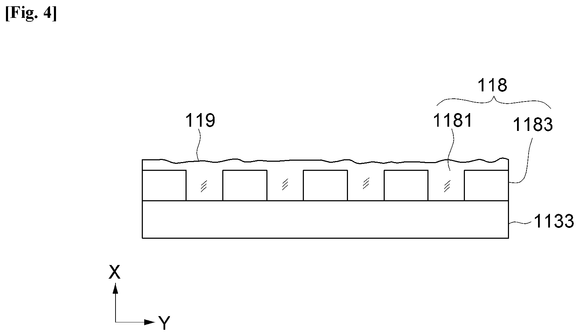

FIG. 4 is a bottom enlarged view of the battery cell 110 of the embodiment.

With reference to FIG. 4, the foamable refractory member 119 may fill at least some of the plurality of perforated holes. The foamable refractory member 119 may pass through at least some of the plurality of perforated holes. This is because the foamable refractory member 119 is formed by applying a foamable refractory coating material onto the terrace portion 1133 on which the porous member 118 is disposed.

With reference to FIG. 4, the perforated holes of the porous member 118 may be impregnated with most of the foamable refractory coating material. A part of the foamable refractory coating material may form a thin film on the surface of the porous member 118. That is, a thickness of the foamable refractory member 119 may be smaller than a thickness of the porous member 118. In this case, the thickness of the foamable refractory member 119 may mean a thickness of a portion of the foamable refractory member 119 exposed from the surface of the porous member 118. In addition, this means that the amount of use of the refractory coating material may be reduced when the porous member 118 has a mesh structure including the plurality of perforated holes.

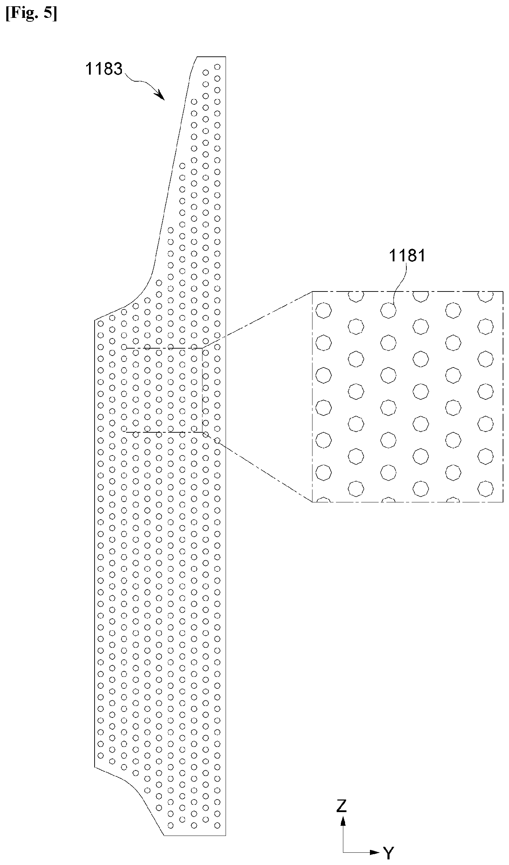

FIG. 5 is a front view of the porous member 118 of the embodiment. Specifically, FIG. 5 is a front view and a partially enlarged view of the porous member 118.

With reference to FIG. 5, the porous member 118 may have a mesh structure including a plurality of perforated holes. In the mesh structure, the shapes or arrangements of the perforated holes are not specifically limited. Meanwhile, in case that the perforated holes have constant shapes and are disposed regularly, the foamable refractory member 119 may be fixed to the terrace portion 1133 with a more stable coupling force and shape.

With reference to FIG. 5, in the mesh structure, the plurality of perforated holes may each have a polygonal cross-section (regular octagonal cross-section in FIG. 5) having a predetermined area. For example, a cross-sectional shape of the perforated hole may be a circular or polygonal shape having a predetermined area. Specifically, a cross-sectional shape of the perforated hole may be a square, regular hexagonal, or regular octagonal shape having a predetermined area. This may mean that the cross-sectional shape of the perforated hole is constant.

With reference to FIG. 5, in the mesh structure, the plurality of perforated holes may be spaced apart from one another at predetermined intervals. The plurality of perforated holes which is disposed in the porous member 118 may be spaced apart from one another at predetermined intervals. This may mean that the perforated holes are regularly arranged in the porous member 118.

The porous member 118 may be coupled or attached to the terrace portion 1133 by means of an adhesive member (not illustrated). That is, the battery cell 110 may further include the adhesive member (not illustrated) disposed between the terrace portion 1133 and the porous member 118. The adhesive member may include a double-sided adhesive tape or the like. In addition, the foamable refractory member 119 may pass through some of the perforated holes of the porous member 118. In this case, the bondable member may attach the terrace portion 1133 and the foamable refractory member 119.

As described above, the battery cell 110, which includes the foamable refractory member 119 disposed at a particular position on the cell case 113, specifically on the terrace portion 1133 of the cell case 113, may delay the propagation of heat and flame to the adjacent battery cell 110 even in the event of thermal runaway. In addition, this advantage may be improved by further disposing the porous member 118 between the terrace portion 1133 and the foamable refractory member 119.

The present disclosure, in another embodiment, relates to the battery assembly 10.

The battery assembly 10 may include a battery module and a battery pack. In general, the battery module may refer to a structure in which the plurality of battery cells 110 are assembled. In addition, the battery pack may refer to a structure in which the plurality of battery modules are assembled. Recently, there has been known a technology for immediately obtaining the battery pack by excluding a process of manufacturing the battery module by using the battery cells 110. The battery assembly 10 of the present disclosure may also include the battery pack with a shape excluding the battery module. The battery module and the battery pack may be common in that the battery module and the battery pack include the plurality of battery cells 110 and the case configured to accommodate the plurality of battery cells 110.

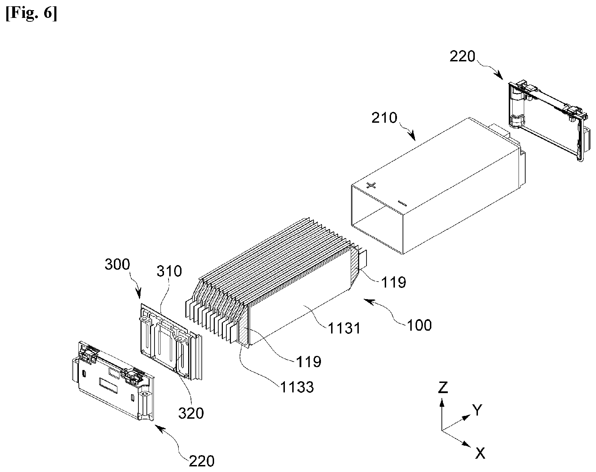

FIG. 6 is an exploded perspective view of the battery assembly 10 of the embodiment.

With reference to FIG. 6, the battery assembly 10 may include an assembly case 200 including an accommodation space, and a cell assembly 100 disposed in the accommodation space. The cell assembly 100 may include the plurality of battery cells 110.

The battery assembly 10 may include a busbar assembly 300 disposed between the assembly case 200 and the cell assembly 100. The busbar assembly 300 may be disposed between the electrode leads 115 and 117 of the battery cell 110 and the assembly case 200. The busbar assembly 300 may electrically connect the plurality of battery cells 110 that constitute the cell assembly 100. The busbar assembly 300 may include a busbar frame 310 configured to form a framework thereof, and a lead insertion portion 320 to which the electrode leads 115 and 117 of the battery cell 110 are connected.

The assembly case 200 may include a case main body 210 configured to accommodate the cell assembly 100. The case main body 210 may have a structure in which any one surface and one surface facing the surface are penetrated. An imprint may be formed on an upper surface of the case main body 210 adjacent to one penetrated surface and indicate a terminal of the battery cell 110. The assembly case 200 may further include a case endplate 220 configured to close the penetrated both sides of the case main body 210. The busbar assembly 300 may be disposed between the cell assembly 100 and the case endplate 220.

The battery assembly 10 may include the plurality of battery cells 110 of the present disclosure. Therefore, the contents related to the battery cell 110 in the description of the battery assembly 10 may be applied in an intact manner.

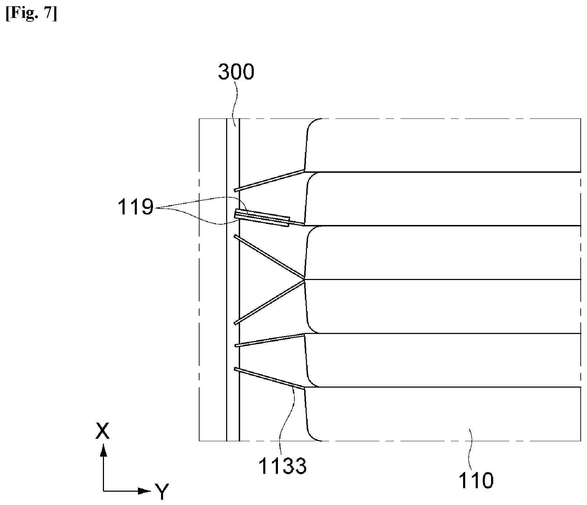

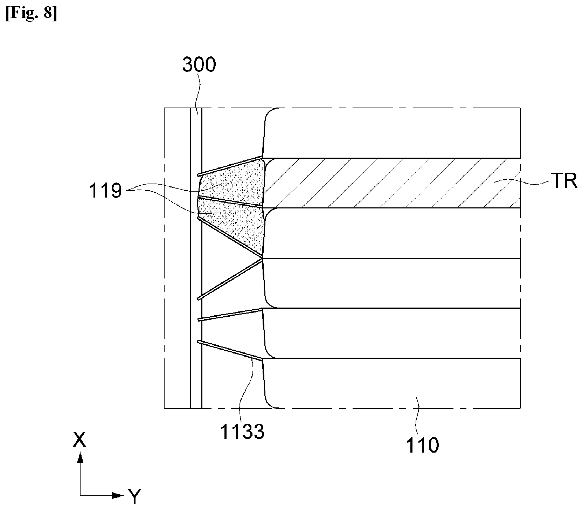

A process in which the battery assembly 10 delays the propagation of heat and flame in the event of thermal runaway in the battery cell 110 will be described more specifically with reference to FIGS. 7 and 8.

FIG. 7 is a top cross-sectional view of the battery assembly 10 of the embodiment before the occurrence of thermal runaway. FIG. 8 is a top cross-sectional view of the battery assembly 10 of the embodiment after the occurrence of thermal runaway (TR).

With reference to FIG. 7, the foamable refractory member 119 may be disposed only on the battery cell 110 including the foamable refractory member 119 before the occurrence of thermal runaway. Before the occurrence of thermal runaway, the foamable refractory member 119 disposed on one battery cell 110 may not be in contact with another adjacent battery cell 110. The foamable refractory member 119 may not couple the plurality of adjacent battery cells 110 directly or indirectly.

As described above, the foamable refractory member 119 may expand when a temperature of the battery cell 110 is equal to or higher than a predetermined temperature. Specifically, the foamable refractory member 119 may be expanded when a temperature of the battery cell 110, on which the foamable refractory member 119 is disposed, is equal to or higher than a predetermined temperature.

With reference to FIG. 8, when thermal runaway (TR) occurs in the battery cell 110, heat may be generated by flames, emissions, vent gases, and the like. The heat may be transferred to the terrace portion 1133, and the foamable refractory member 119 may expand. In this case, the foamable refractory member 119 may expand to form char. Heat, oxygen, and the like may not be transferred to a portion surrounded by the char. In this case, the expanded foamable refractory member 119 may fill empty spaces between the terrace portions 1133 of the adjacent battery cells 110. As a result, it is possible to prevent or delay the propagation of the heat and flame caused by the thermal runaway to the adjacent cell.

As described above, the battery assembly 10, which includes the plurality of battery cells 110 provided with the foamable refractory members 119 disposed at the particular positions on the cell case 113 with the particular shape, may perform the thermally stable motion. This is because the propagation of heat and flame to another battery cell 110 adjacent to the battery cell 110 may be sufficiently prevented or delayed.

Another embodiment of the present disclosure is a vehicle 1. For example, the vehicle 1 may include a two-wheeled car such as a motorized kickboard, an electric car, or a flying device such as a drone.

The vehicle 1 of the present disclosure may include the battery assembly 10. Electrical energy generated by the battery assembly 10 may be applied as power for the vehicle 1. The vehicle 1 of the present disclosure may include a body part and a power supply part, and the power supply part may include the battery assembly 10 of the present disclosure.

## Claims

1. A battery cell comprising:
an electrode assembly;
a cell case comprising a main body portion configured to accommodate the electrode assembly, and a terrace portion disposed outside the main body portion;
an electrode lead extended to the outside from the cell case through the terrace portion; and
a foamable refractory member disposed adjacent to the terrace portion.

2. The battery cell of claim 1, wherein the main body portion forms an accommodation space configured to accommodate the electrode assembly, a thickness of the terrace portion is smaller than a thickness of the main body portion, and a width of the terrace portion adjacent to the electrode lead is smaller than a width of the terrace portion adjacent to the main body portion.

3. The battery cell of claim 1, wherein the foamable refractory member is disposed on a surface of the terrace portion, and a width of the foamable refractory member adjacent to the electrode lead is smaller than a width of the foamable refractory member adjacent to the main body portion.

4. The battery cell of claim 1, wherein the foamable refractory member expands at a temperature equal to or higher than a predetermined temperature.

5. The battery cell of claim 1, wherein a shape of the foamable refractory member corresponds to a shape of the terrace portion.

6. The battery cell of claim 1, wherein the foamable refractory member is a coating material covering at least a part of a surface of the terrace portion.

7. The battery cell of claim 1, further comprising:
a porous member disposed between the terrace portion and the foamable refractory member.

8. The battery cell of claim 7, wherein a width of the porous member adjacent to the electrode lead is smaller than a width of the porous member adjacent to the main body portion.

9. The battery cell of claim 7, wherein a shape of the porous member corresponds to a shape of the terrace portion.

10. The battery cell of claim 7, wherein the porous member covers a surface of the terrace portion.

11. The battery cell of claim 7, wherein a thickness of the porous member is smaller than a thickness of the main body portion.

12. The battery cell of claim 7, wherein the porous member has a plurality of perforated holes.

13. The battery cell of claim 12, wherein a cross-section of each of the plurality of perforated holes has a polygonal shape having a predetermined area, and the plurality of perforated holes are spaced apart from one another at predetermined intervals.

14. The battery cell of claim 12, wherein at least some of the plurality of perforated holes are filled with the foamable refractory member.

15. The battery cell of claim 12, wherein the foamable refractory member passes through at least some of the plurality of perforated holes.

16. The battery cell of claim 7, wherein a thickness of the foamable refractory member is smaller than a thickness of the porous member.

17. The battery cell of claim 7, further comprising:
an adhesive member disposed between the terrace portion and the porous member.

18. The battery cell of claim 17, wherein the adhesive member is configured to attach the terrace portion and the foamed refractory member.

19. A battery assembly comprising:
an assembly case comprising an accommodation space;
a cell assembly disposed in the accommodation space; and
a busbar assembly disposed between the assembly case and the cell assembly,
wherein the cell assembly comprises a plurality of battery cells and
wherein at least one battery cell of the cell assembly comprises:
an electrode assembly;
a cell case comprising a main body portion configured to accommodate the electrode assembly, and a terrace portion disposed outside the main body portion;
an electrode lead extended to the outside from the cell case through the terrace portion; and
a foamable refractory member disposed adjacent to the terrace portion.

20. The battery assembly of claim 19, wherein the foamable refractory member is disposed only on the battery cell comprising the corresponding foamable refractory member.

21. The battery assembly of claim 19, wherein the foamable refractory member expands when a temperature of the main body portion of the battery cell comprising the corresponding foamable refractory member is equal to or higher than a predetermined temperature.

22. A vehicle comprising:
a body part; and
a power supply part,
wherein the power supply part comprises a battery assembly,
wherein the battery assembly comprises:
an assembly case comprising an accommodation space;
a cell assembly disposed in the accommodation space; and
a busbar assembly disposed between the assembly case and the cell assembly,
wherein the cell assembly comprises a plurality of battery cells and
wherein at least one battery cell of the cell assembly comprises:
an electrode assembly;
a cell case comprising a main body portion configured to accommodate the electrode assembly, and a terrace portion disposed outside the main body portion;
an electrode lead extended to the outside from the cell case through the terrace portion; and
a foamable refractory member disposed adjacent to the terrace portion.
